# EUROPÄISCHE PATENTANMELDUNG

(11) **EP 2 787 406 A2**
(43) Veröffentlichungstag der Anmeldung: **08.10.2014**
(21) Anmeldenummer: 14001975.3
(22) Anmeldetag: 16.05.2012
(51) Int. Cl.: G05B 19/042, G06F 3/01, G06F 3/041

(54) **Touchscreen mit analoger Druckerfassung als Bedienerschnittstelle für industrielle technische Einrichtung**

(62) Teilanmeldung aus: 12168253.8
(71) Anmelder: Siemens Aktiengesellschaft, 80333 München (DE)
(72) Erfinder: Hauf, Ronald, 91096 Möhrendorf (DE)

(57) **Zusammenfassung**

Von einem Bediener (3) einer industriellen technischen Einrichtung (1) wird auf einen Bereich (6) eines Touchscreens (5) ein Druck (p) ausgeübt. Mittels einer dem Bereich (6) zugeordneten Sensoreinrichtung (8) wird ein von dem ausgeübten Druck (p) abhängiger Wert (w) generiert. Der Wert (w) wird einer Auswertungseinrichtung (9) zugeführt. In einem Normal-betrieb wird von der Auswertungseinrichtung (9) eine von dem ausgeübten Druck (p) abhängige Größe (g) an eine Steuereinrichtung (2) der industriellen technischen Einrichtung (1) übermittelt. Von der Steuereinrichtung (2) wird anhand der an sie übermittelten Größe (g) eine von dem ausgeübten Druck (p) abhängige Reaktion ermittelt und ausgeführt. Die Reaktion umfasst die Aktivierung eines Elementes (12) der industriellen technischen Einrichtung (1) und das Ausgeben eines von dem ausgeübten Druck (p) abhängigen Sollwertes (n*) an das Element (12). Weiterhin erfolgt mittels eines dem Bereich (6) zugeordneten Aktuators (13) eine für den Sollwert (n*) spezifische taktile Ansteuerung des Bereichs (6).

## Beschreibung

Die vorliegende Erfindung betrifft ein Betriebsverfahren für eine industrielle technische Einrichtung,
- wobei von einem Bediener der industriellen technischen Einrichtung auf einen Bereich eines Touchscreens ein Druck ausgeübt wird,
- wobei mittels einer dem Bereich zugeordneten Sensoreinrichtung ein vom Drücken des Bereichs abhängiger Wert generiert wird,
- wobei der generierte Wert einer Auswertungseinrichtung zugeführt wird,
- wobei in einem Normalbetrieb von der Auswertungseinrichtung eine von dem Drücken abhängige Größe an eine Steuereinrichtung der industriellen technischen Einrichtung übermittelt wird und von der Steuereinrichtung anhand der an sie übermittelten Größe eine von dem Drücken abhängige Reaktion ermittelt und ausgeführt wird.

Die vorliegende Erfindung betrifft weiterhin eine Bedienerschnittstelle einer industriellen technischen Einrichtung,
- wobei die Bedienerschnittstelle einen Touchscreen aufweist, der mindestens einen Bereich aufweist, auf den von einem Bediener der industriellen technischen Einrichtung ein Druck ausgeübt wird,
- wobei dem Bereich eine Sensoreinrichtung zugeordnet ist, mittels derer ein vom Drücken abhängiger Wert generiert wird,
- wobei die Bedienerschnittstelle eine Auswertungseinrichtung aufweist, mit der die Sensoreinrichtung zur Übermittlung des von ihr generierten Wertes verbunden ist,
- wobei die Auswertungseinrichtung eine Schnittstelle zu einer Steuereinrichtung der industriellen technischen Einrichtung aufweist, über die eine vom Drücken abhängige Größe an die Steuereinrichtung übermittelt wird.

Die vorliegende Erfindung betrifft weiterhin eine industrielle technische Einrichtung,
- wobei die industrielle technische Einrichtung eine Bedienerschnittstelle der obenstehend beschriebenen Art aufweist,
- wobei die industrielle technische Einrichtung eine Steuereinrichtung aufweist,
- wobei die Steuereinrichtung eine Schnittstelle zur Auswertungseinrichtung zum Entgegennehmen einer ihr von der Auswertungseinrichtung übermittelten Größe aufweist,
- wobei von der Steuereinrichtung anhand der an sie übermittelten Größe eine entsprechende Reaktion ermittelt und ausgeführt wird.

Zur Bedienung von Maschinen werden im Stand der Technik an Bedienpaneelen, mobilen Bedienpaneelen und Maschinenkontrollpaneelen in der Regel Hardkeys und Softkeys eingesetzt. Derartigen Tasten ist immer nur eine Funktion zugeordnet, die durch Drücken der entsprechenden Taste aktiviert und durch Loslassen der entsprechenden Taste deaktiviert wird. Bei Hardkeys ist die Funktion stets dieselbe. Bei Softkeys wird den Tasten in Abhängigkeit vom Gesamtzustand der industriellen technischen Einrichtung eine jeweilige Funktion zugewiesen.

Im Stand der Technik ist weiterhin bekannt, als Bedienerschnittstelle einen Touchscreen zu verwenden. Bei Touchscreens kann das Berühren des Touchscreens erkannt und dementsprechend reagiert werden. Einzelnen Bereichen des Touchscreens kann - analog zu Softkeys - eine variable Funktion zugeordnet werden.

Aufgrund des Umstands, dass Hard- und Softkeys im Wesentlichen binäre Funktionen zugeordnet sind, muss im Stand der Technik beim Bewegen von Achsen oder Spindeln an Maschinen in der Regel die jeweils zu verfahrende Achse durch Betätigen einer Taste aktiviert werden. Die zugehörige Verfahrgeschwindigkeit oder Drehzahl wird über einen separaten elektromechanischen Drehschalter (override) eingestellt. Im Stand der Technik ist in der Regel somit eine Zweihandbedienung erforderlich, die insbesondere beim Arbeiten mit einem mobilen Paneel keinen ergonomisch günstigen Bedienablauf zulässt. Alternativ können die Bedienhandlungen sequentiell durchgeführt werden. Auch diese Vorgehensweise ist jedoch ergonomisch ungünstig. Bedienerschnittstellen, bei denen mittels einer einzigen Taste sowohl die Anwahl der zu verfahrenden Achse bzw. des anzusteuernden Antriebs als auch dessen Sollwert vorgegeben werden kann, sind im Stand der Technik nicht bekannt.

In jüngerer Zeit sind analog-resistive Sensoren bekannt geworden, die für Touchscreens geeignet sind und die den auf sie ausgeübten Druck analog oder quasianalog hochauflösend erfassen können. Rein beispielhaft wird auf entsprechende Produkte der Firma Peratech, England - insbesondere das Produkt "QTC Clear" - und auf sogenannte piezoelektrische Funktionspolymere verwiesen. Mittels beider Systeme kann der Druck auf den Touchscreen analog und hochauflösend erfasst werden.

Aus der US 2010/0 123 686 A1 ist eine Einrichtung der Kommunikationstechnik bekannt, die einen drucksensitiven Touchscreen aufweist, wobei mittels des Touchscreens nicht nur ein Berühren als solches, sondern auch der hierbei ausgeübte Druck quantitativ erfassbar ist. In Abhängigkeit von dem erfassten Druck wird eine Reaktion ergriffen, beispielsweise mit einer druckabhängigen Geschwindigkeit in einer Liste geblättert oder druckabhängig eine von mehreren verschiedenen Reaktionen ergriffen. Beiläufig ist in der US 2010/0 123 686 A1 erwähnt, dass der Touchscreen bei einer industriellen Einrichtung, beispielsweise bei einer Steuereinrichtung, verwendet werden kann.

Aus der US 2007/0 024 595 A1 ist eine Einrichtung der Kommunikationstechnik bekannt, die einen drucksensitiven Touchscreen aufweist, wobei mittels des Touchscreens nicht nur ein Berühren als solches, sondern auch der hierbei ausgeübte Druck quantitativ erfassbar ist. In Abhängigkeit von dem erfassten Druck wird eine Reaktion ergriffen, beispielsweise mit einer druckabhängigen Geschwindigkeit in einer Liste geblättert.

Aus der US 2011/0 141 052 A1 ist ein Betriebsverfahren für ein Touchpad bekannt, das auch als Touchscreen ausgebildet sein kann. Beiläufig ist erwähnt, dass das Touchpad im industriellen Umfeld verwendet werden kann. Weiterhin offenbart die US 2011/0 141 052 A1, dass dem Touchpad Kraftsensoren zugeordnet sein können, mittels dessen eine auf das Touchpad ausgeübte Kraft erfasst wird. Weiterhin offenbart die US 2011/0 141 052 A1, dass in Abhängigkeit von der Betätigung des Touchpads mittels eines Aktuators eine taktil erfassbare Rückmeldung an den Bediener ausgegeben wird. Die US 2011/0 141 052 A1 offenbart das Ausgeben der taktil erfassbaren Rückmeldung an den Bediener nur in Verbindung mit dem Hervorrufen einer so genannten Klick-Funktion.

Die Aufgabe der vorliegenden Erfindung besteht darin, Möglichkeiten zu schaffen, mittels derer auf einfache und zuverlässige Weise eine Einhandbedienung einer industriellen technischen Einrichtung möglich wird.

Die Aufgabe wird durch ein Betriebsverfahren mit den Merkmalen des Anspruchs 1 gelöst. Vorteilhafte Ausgestaltungen des erfindungsgemäßen Betriebsverfahrens sind Gegenstand der abhängigen Ansprüche 2 bis 9.

Erfindungsgemäß ist vorgesehen, bei einem Betriebsverfahren der eingangs genannten Art mittels der Sensoreinrichtung nicht nur das (binäre) Drücken des entsprechenden Bereichs zu erfassen, sondern einen von dem ausgeübten Druck abhängigen Wert zu generieren. Der generierte Wert ist also ein Maß für den ausgeübten Druck. Der Wert soll also eine stetige und monotone Funktion des ausgeübten Druckes sein. Beispielsweise kann eine lineare, exponentielle oder logarithmische Beziehung bestehen. In analoger Weise ist auch die an die Steuereinrichtung übermittelte Größe von dem ausgeübten Druck abhängig. Aus diesem Grund kann - nicht aber muss - auch die von der Steuereinrichtung vermittelte und ausgeführte Reaktion von dem ausgeübten Druck abhängig sein. Weiterhin umfasst die von dem ausgeübten Druck abhängige Reaktion die Aktivierung eines Elements der industriellen technischen Einrichtung und das Ausgeben eines von dem ausgeübten Druck abhängigen Sollwertes an das Element, wobei der Sollwert eine monoton steigende Funktion des Druckes ist. Weiterhin erfolgt mittels eines dem Bereich zugeordneten Aktuators eine für den Sollwert spezifische taktile Ansteuerung des Bereichs. Dadurch kann dem Bediener auch dann eine Rückkopplung über die von ihm bewirkte Reaktion erhalten, wenn er weder die industrielle technische Einrichtung als solche noch die Bedienerschnittstelle im Blickfeld hat.

In einer bevorzugten Ausgestaltung der vorliegenden Erfindung weist der Sollwert den Wert Null auf, bis der Druck einen Schwellenwert übersteigt. Der Sollwert nimmt einen Wert ungleich 0 somit nicht bereits dann an, wenn der entsprechende Bereich des Touchscreens berührt wird, sondern erst dann, wenn tatsächlich ein nennenswerter Druck auf den entsprechenden Bereich ausgeübt wird. Der Sollwert als solcher kann insbesondere ein Kraft-, Drehzahl- oder Geschwindigkeitssollwert sein.

In einer besonders bevorzugten Ausgestaltung der vorliegenden Erfindung ist auch die Ableitung des Sollwertes nach dem Druck eine monoton steigende Funktion. Durch diese Ausgestaltung kann bei relativ geringen Drücken eine feinfühlige Dosierung der Ansteuerung des Antriebs erfolgen, während durch kräftiges Drücken schnell ein hoher Sollwert erreicht werden kann.

Es ist möglich, dass der Sollwert unabhängig vom Zustand der industriellen technischen Einrichtung ist. Vorzugsweise ist jedoch vorgesehen, dass der Sollwert zusätzlich eine Funktion eines Zustandes der industriellen technischen Einrichtung zum Zeitpunkt der Aktivierung des Elements ist.

Weiterhin ist möglich, dass die von dem ausgeübten Druck abhängige Reaktion die Aktivierung einer Anzahl von Elementen der industriellen technischen Einrichtung umfasst und dass die Anzahl von aktivierten Elementen eine monoton steigende Funktion des ausgeübten Druckes ist.

Vorzugsweise ist vorgesehen,
- dass der von dem ausgeübten Druck abhängige Wert von der Sensoreinrichtung auf fehlersichere Weise generiert wird,
- dass der von dem ausgeübten Druck abhängige Wert der Auswertungseinrichtung auf fehlersichere Weise zugeführt wird,
- dass die von dem ausgeübten Druck abhängige Größe von der Auswertungseinrichtung auf fehlersichere Weise ermittelt und an die Steuereinrichtung übermittelt wird und
- dass die von dem ausgeübten Druck abhängige Reaktion von der Steuereinrichtung auf fehlersichere Weise ermittelt und ausgeführt wird.

Durch diese Vorgehensweise kann im Prinzip ein fehlersicherer Betrieb der industriellen technischen Einrichtung erreicht werden. Vom Ansatz her muss, um einen fehlersicheren Betrieb zu gewährleisten, auch auf fehlersichere Weise erfasst werden, ob auf den entsprechenden Bereich des Touchscreens ein Druck ausgeübt wird. Im optimalen Fall ist daher vorgesehen, dass auch der ausgeübte Druck von der Sensoreinrichtung auf fehlersichere Weise erfasst wird. Alternativ ist es jedoch ausreichend, wenn der ausgeübte Druck, also der analoge Wert, nur auf nicht fehlersichere Weise erfasst wird und zusätzlich über einen weiteren Kanal das (binäre) Drücken des entsprechenden Bereichs erfasst wird.

Vorzugsweise ist weiterhin vorgesehen,
- dass durch das Beenden der Druckausübung ein Timer gestartet wird, der eine vorbestimmte Ablaufzeit aufweist,
- dass in dem Fall, dass von dem Bediener vor Erreichen der Ablaufzeit auf den Bereich des Touchscreens oder auf einen anderen Bereich des Touchscreens erneut ein Druck ausgeübt wird, der Timer zurückgesetzt wird,
- dass in dem Fall, dass von dem Bediener bis zum Erreichen der Ablaufzeit weder auf den Bereich des Touchscreens noch auf einen anderen Bereich des Touchscreens erneut ein Druck ausgeübt wird, in einen Sonderbetrieb übergegangen wird, und
- dass in dem Fall, dass von dem Bediener im Sonderbetrieb auf den Bereich des Touchscreens oder auf einen anderen Bereich des Touchscreens erneut ein Druck ausgeübt wird, von der Steuereinrichtung nicht die Reaktion des Normalbetriebs ermittelt und ausgeführt wird.

Durch diese Vorgehensweise kann gewährleistet werden, dass zum einen nicht durch ein versehentliches erstmaliges Berühren bereits eine Bedienaktion ausgelöst wird und zum anderen eine Bedienaktion auch dann nicht ausgelöst wird, wenn beispielsweise ein Fremdkörper auf den Touchscreen gerät oder die Bedienerschnittstelle (im Falle einer mobilen Bedienerschnittstelle) auf den Boden fällt oder dergleichen.

Selbstverständlich muss es möglich sein, den Sonderbetrieb wieder zu verlassen. Es wird also im Sonderbetrieb geprüft, ob der Bediener einen Umschaltbefehl vorgibt. Bei Vorgabe des Umschaltbefehls wird vom Sonderbetrieb in den Normalbetrieb übergegangen. Erfindungsgemäß ist der Umschaltbefehl jedoch eine von einer einmaligen Druckausübung auf einen einzelnen Bereich des Touchscreens verschiedene Bedienhandlung des Bedieners. Beispielsweise kann der Umschaltbefehl ein längeres Betätigen einer separaten Taste oder mehrerer separater Tasten oder das simultane Betätigen einerseits einer Taste und andererseits des Drückens eines bestimmten Bereichs des Touchscreens sein. Auch ist es möglich, dass der Umschaltbefehl durch eine vorbestimmte Eingabesequenz festgelegt ist. Die Aufgabe wird weiterhin durch eine Bedienerschnittstelle mit den Merkmalen des Anspruchs 10 gelöst. Vorteilhafte Ausgestaltungen der Bedienerschnittstelle sind Gegenstand der abhängigen Ansprüche 11 bis 18.

Erfindungsgemäß ist vorgesehen, eine Bedienerschnittstelle der eingangs genannten Art dadurch auszugestalten,
- dass mittels der Sensoreinrichtung ein von dem ausgeübten Druck abhängiger Wert generiert wird,
- dass die Auswertungseinrichtung eine Schnittstelle zur Steuereinrichtung der industriellen technischen Einrichtung aufweist, über die eine von dem ausgeübten Druck abhängige Größe an die Steuereinrichtung übermittelt wird,
- dass über die Schnittstelle zur Steuereinrichtung der industriellen technischen Einrichtung von der Steuereinrichtung eine Rückmeldung über eine aufgrund der von dem ausgeübten Druck abhängigen Größe ausgeführte Reaktion an die Auswertungseinrichtung übermittelt wird und
- dass dem Bereich ein Aktuator zugeordnet ist, der von der Auswertungseinrichtung mit einer von der ausgeführten Reaktion abhängigen, vom Bediener taktil erfassbaren Ansteuerung beaufschlagt wird.

Die vorteilhaften Ausgestaltungen der Bedienerschnittstelle korrespondieren teilweise mit denen des erfindungsgemäßen Betriebsverfahrens. Bezüglich dieser Ausgestaltungen wird auf die obigen Ausführungen zum erfindungsgemäßen Betriebsverfahren verwiesen. Nachstehend wird auf die zusätzlichen erfindungsgemäßen Ausgestaltungen eingegangen.

Vorzugsweise ist die Bedienerschnittstelle als mobile Bedienerschnittstelle ausgebildet. Insbesondere bei einer mobilen Bedienerschnittstelle kann der Bediener unter Umständen eine Hand zum Halten der Bedienerschnittstelle benötigen, so dass von vorneherein nur eine Einhandbedienung möglich ist.

Der Touchscreen ist auf einer Oberseite der Bedienerschnittstelle angeordnet. Vorzugsweise weist die Bedienerschnittstelle - beispielsweise an ihrer Unterseite - einen Haltegriff auf. Dadurch ist ein bequemes und einfaches Halten der Bedienerschnittstelle durch den Bediener möglich.

In einer besonders bevorzugten Ausgestaltung der Bedienerschnittstelle ist vorgesehen, dass der Haltegriff mindestens ein Betätigungselement aufweist, dass das Betätigungselement mit der Auswertungseinrichtung signaltechnisch verbunden ist und dass das Betätigen des Betätigungselements von der Auswertungseinrichtung zusätzlich zum Ausüben von Druck auf den Bereich des Touchscreens ausgewertet wird. Durch diese Ausgestaltung kann eine noch höhere Betriebssicherheit erreicht werden. Beispielsweise ist es möglich, dass das Aktivieren von Antrieben nur dann erfolgt, wenn zusätzlich das Betätigungselement betätigt ist. Auch ist es möglich, das Betätigungselement ähnlich einer beispielsweise im Eisenbahnwesen an sich bekannten Totmanntaste zu betreiben, dass es also regelmäßig betätigt werden muss. Auch andere Verwendungen sind möglich, beispielsweise eine Kopplung von Funktionen oder eine Funktionsselbsthaltung.

Die Schnittstelle zur Steuereinrichtung der industriellen technischen Einrichtung ist vorzugsweise als leitungslose Schnittstelle ausgebildet. Beispielsweise kann die Schnittstelle als Funkverbindung ausgebildet sein.

Die Aufgabe wird weiterhin durch eine industrielle technische Einrichtung mit den Merkmalen des Anspruchs 19 gelöst.

Erfindungsgemäß weist die industrielle technische Einrichtung eine erfindungsgemäße Bedienerschnittstelle auf. Weiterhin nimmt die Steuereinrichtung die von dem ausgeübten Druck abhängige Größe entgegen und ermittelt eine von dem ausgeübten Druck abhängige Reaktion und führt diese aus. Weiterhin ermittelt die Steuereinrichtung aufgrund der von ihr ermittelten und ausgeführten Reaktion die Rückmeldung und übermittelt diese an die Auswertungseinrichtung der Bedienerschnittstelle.

Die vorteilhaften Ausgestaltungen der erfindungsgemäßen industriellen technischen Einrichtung korrespondieren mit denen des Betriebsverfahrens.

Die oben beschriebenen Eigenschaften, Merkmale und Vorteile dieser Erfindung sowie die Art und Weise, wie diese erreicht werden, werden klarer und deutlicher verständlich im Zusammenhang mit der folgenden Beschreibung der Ausführungsbeispiele, die in Verbindung mit den Zeichnungen näher erläutert werden. Hierbei zeigen in schematischer Darstellung:
- FIG 1: ein Blockschaltbild einer industriellen technischen Einrichtung,
- FIG 2: eine Bedienerschnittstelle,
- FIG 3: eine funktionale Darstellung der Bedienerschnittstelle und einer Steuereinrichtung,
- FIG 4: ein Druckdiagramm,
- FIG 5 bis 7: Ablaufdiagramme,
- FIG 8 und 9: Druckdiagramme,
- FIG 10: ein Ablaufdiagramm,
- FIG 11: einen Schritt in einem Ablaufdiagramm,
- FIG 12: ein Ablaufdiagramm,
- FIG 13: eine mögliche Ausgestaltung einer Bedienerschnittstelle,
- FIG 14: die Unterseite der Bedienerschnittstelle von FIG 13 und
- FIG 15: ein Zeitdiagramm.

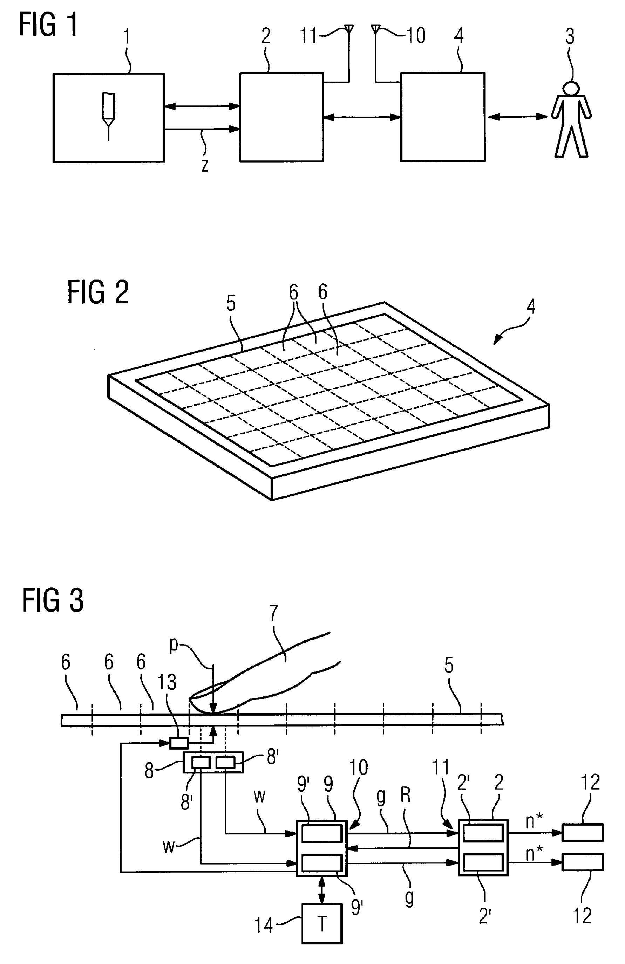

Gemäß FIG 1 wird eine industrielle technische Einrichtung 1 - rein beispielhaft ist zu diesem Zweck in FIG 1 eine Bohrmaschine dargestellt - mittels einer Steuereinrichtung 2 gesteuert. Die Steuereinrichtung 2 nimmt von einem Bediener 3 der industriellen technischen Einrichtung 1 über eine Bedienerschnittstelle 4 Eingaben entgegen, die er im Rahmen der Ansteuerung der industriellen technischen Einrichtung beabsichtigt. Weiterhin gibt die Steuereinrichtung 2 über die Bedienerschnittstelle 4 Ausgaben und Informationen an den Bediener 3 aus.

Die Bedienerschnittstelle 4 weist gemäß den FIG 2 und 3 einen Touchscreen 5 auf. Der Touchscreen 5 weist gemäß FIG 2 mindestens einen Bereich 6 auf, auf den von dem Bediener 3 ein Druck p ausgeübt werden kann. In der Regel sind viele derartiger Bereiche 6 vorhanden, wobei die Bereiche 6 in einer zweidimensionalen Matrix angeordnet sind. Beispielsweise können 100 x 100 Bereiche 6 oder noch mehr vorhanden sein. Die Bereiche 6 sind zu Gruppen zusammengefasst, wobei jede Gruppe einem Touchkey-Element entspricht.

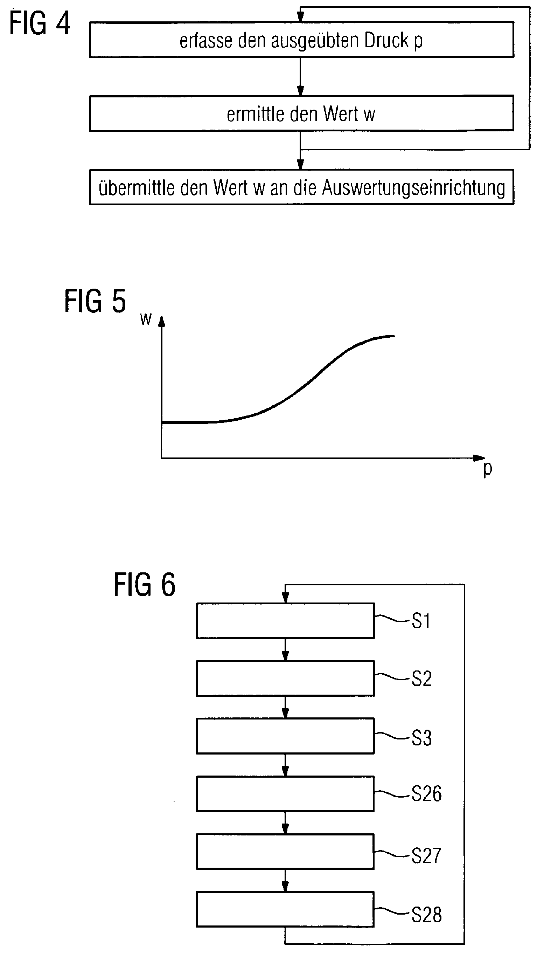

Wenn von dem Bediener 3 - beispielsweise mit einem seiner Finger 7 - der entsprechende Druck p ausgeübt wird, wird dies gemäß den FIG 3 und 4 mittels einer dem entsprechenden Bereich 6 zugeordneten Sensoreinrichtung 8 erfasst. Die Sensoreinrichtung 8 generiert gemäß FIG 4 aufgrund des ausgeübten Druckes p einen Wert w, der von dem Druck p abhängig ist, d. h. der ein Maß für die Größe des ausgeübten Druckes p ist. Der Wert w kann beispielsweise eine elektrische Spannung oder ein elektrischer Strom sein. Der Wert w kann gemäß FIG 5 linear oder nichtlinear von dem ausgeübten Druck p abhängen. Die Genauigkeit, mit welcher der Druck p erfasst wird, ist von untergeordneter Bedeutung. Beispielsweise können 5, 8, 10, 50, 100 usw. Druckniveaus unterscheidbar sein. Entscheidend ist, dass nicht nur zwischen den Zuständen "gedrückt" und "nicht gedrückt" unterschieden wird, sondern zusätzlich auch eine Information über die Größe des ausgeübten Druckes p zur Verfügung steht.

Die Sensoreinrichtung 8 führt den von ihr generierten, von dem ausgeübten Druck p abhängigen Wert w einer Auswertungseinrichtung 9 zu. Die Auswertungseinrichtung 9 ist Bestandteil der Bedienerschnittstelle 4. Die Auswertungseinrichtung 9 ist mit der Sensoreinrichtung 8 zur Übermittlung des entsprechenden Wertes w von der Sensoreinrichtung 8 an die Auswertungseinrichtung 9 verbunden. Die Auswertungseinrichtung 9 nimmt den von der Sensoreinrichtung 8 generierten Wert w gemäß den FIG 3 und 6 in einem Schritt S1 entgegen. Sie ermittelt anhand des entgegen genommenen Wertes w in einem Schritt S2 eine vom Druck p abhängige Größe g.

Die Art der ermittelten Größe g und deren Auflösung können - analog zu dem von dem ausgeübten Druck p abhängigen Wert w - nach Bedarf sein. Entscheidend ist, dass entsprechend der Darstellung in FIG 5 anhand der ermittelten Größe g nicht nur die Zustände "gedrückt" und "nicht gedrückt" unterschieden werden können, sondern - beispielsweise im Rahmen einer 8 bit Auflösung - auch eine Information über die Größe des ausgeübten Druckes p zur Verfügung steht. Im einfachsten Fall kann die Größe g mit dem Wert w identisch sein oder eine Digitalisierung des - meist analogen - Wertes w sein.

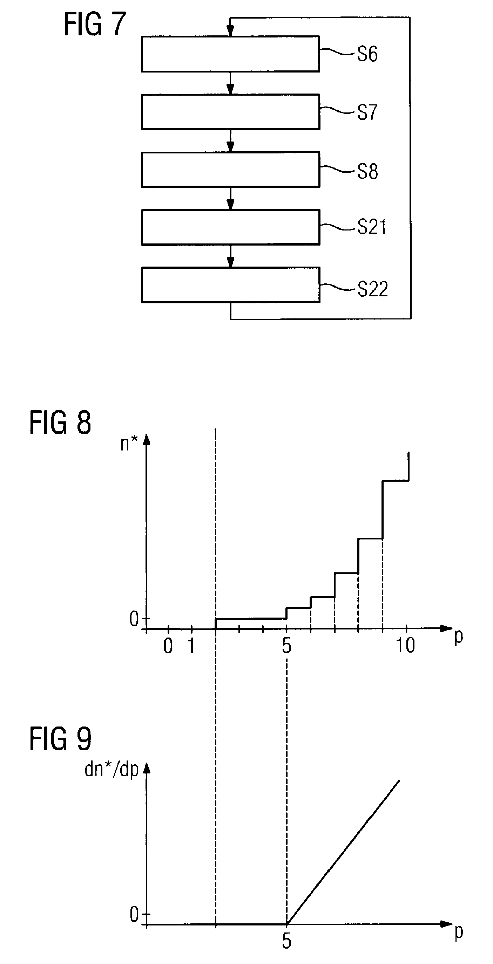

Die Auswertungseinrichtung 9 weist gemäß FIG 3 eine Schnittstelle 10 zur Steuereinrichtung 2 auf. Über die Schnittstelle 10 übermittelt die Auswertungseinrichtung 9 die von dem ausgeübten Druck p abhängige Größe g in einem Schritt S3 an die Steuereinrichtung 2. Die Steuereinrichtung 2 weist ebenfalls eine Schnittstelle 11 auf, die mit der Schnittstelle 10 der Auswertungseinrichtung 9 datentechnisch verbunden ist. Die Steuereinrichtung 2 nimmt gemäß den FIG 3 und 7 über ihre Schnittstelle 11 die von der Auswertungseinrichtung 9 über ihre Schnittstelle 10 ausgegebene, vom ausgeübten Druck p abhängige Größe g in einem Schritt S6 entgegen. Sie ermittelt anhand der an sie übermittelten Größe g in einem Schritt S7 eine Reaktion und führt die Reaktion in einem Schritt S8 aus. Aufgrund des Umstands, dass die übermittelte Größe g von dem ausgeübten Druck p abhängt, kann auch die ermittelte und ausgeführte Reaktion von dem ausgeübten Druck p abhängen.

Die von dem ausgeübten Druck p abhängige Reaktion kann verschiedener Natur sein. FIG 8 zeigt eine mögliche Reaktion. In FIG 8 wird angenommen, dass die von dem ausgeübten Druck p abhängige Größe g digital übermittelt wird, so dass der Druck p als gequantelte Größe zur Verfügung steht. Mit 0, 1, 2, 3 usw. sind in FIG 8 nach rechts die unterscheidbaren Druckniveaus bezeichnet. 0 entspricht keinem Druck, 1 entspricht dem kleinsten erfassbaren, von 0 verschiedenen Druck, die weiteren Werte repräsentieren in streng monoton steigender Folge weitere unterscheidbare Drücke.

Gemäß FIG 8 wird von der Steuereinrichtung 2 beim Drücken eines bestimmten Bereichs 6 des Touchscreens 5 - also bei Erkennen eines Druckes p oberhalb eines vorbestimmten ersten Schwellenwerts - ein dem entsprechenden Bereich 6 zumindest temporär zugeordnetes Element 12 der industriellen technischen Einrichtung 1 (siehe FIG 3) aktiviert. Der erste Schwellenwert kann gleich dem minimal erfassbaren Druck (Druckniveau 1) oder oberhalb davon liegen, beispielsweise entsprechend der Darstellung von FIG 8 beim Druckniveau 2. Weiterhin wird ein entsprechender Sollwert n* an das Element 12 ausgegeben. Gemäß FIG 8 ist der Sollwert n* eine monoton steigende Funktion des Druckes p. Das Element 12 kann beispielsweise ein Antrieb oder eine Presse sein.

Es ist möglich, den Sollwert n* sofort mit dem Aktivieren auf einen Wert größer 0 zu setzen. Vorzugsweise weist der Sollwert n* jedoch den Wert 0 auf, bis der ausgeübte Druck p einen zweiten Schwellenwert übersteigt. Zwischen dem ersten und dem zweiten Schwellenwert liegt in der Regel mindestens ein weiteres, unterscheidbares Druckniveau.

Die Art des Sollwertes n* kann nach Bedarf gewählt sein. Oftmals handelt es sich um einen Kraft-, Drehzahl- oder Geschwindigkeitssollwert.

Wie bereits aus FIG 8 erkennbar ist, steigt der Sollwert n* mit steigendem Druck p zunächst langsam an und steigt dann immer schneller an. Vorzugsweise ist daher entsprechend der Darstellung in FIG 9 nicht nur der Sollwert n* selbst, sondern auch die Ableitung dn*/dp des Sollwertes n* nach dem Druck p eine monoton steigende Funktion des Druckes p. Aus Gründen der einfacheren Darstellung wurde in FIG 9 die - in der Regel recht feine - Quantelung nicht mit dargestellt.

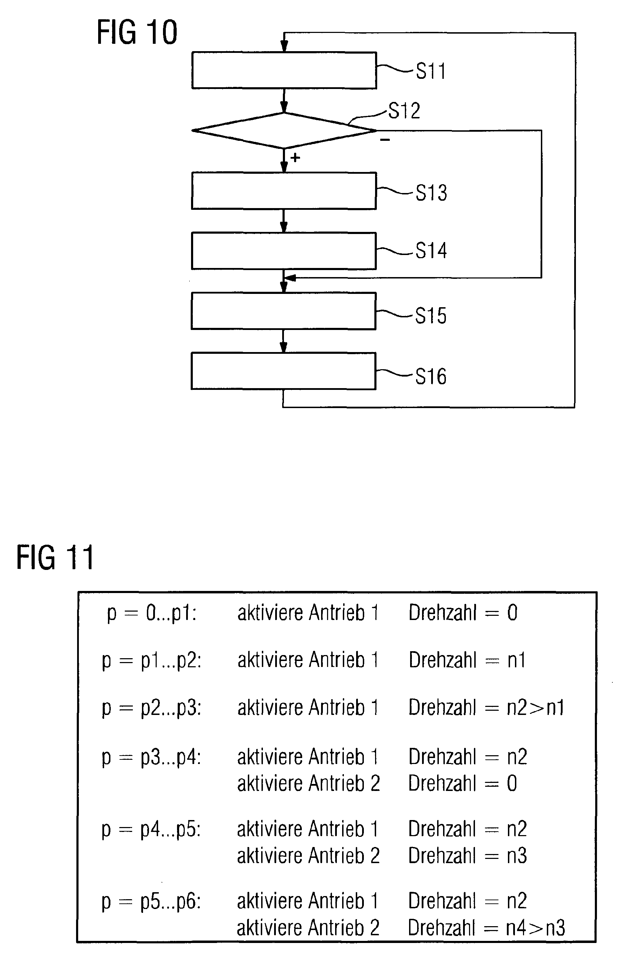

Es ist möglich, dass der Verlauf des Sollwerts n* als Funktion des Druckes p unabhängig von anderen Größen ist. Alternativ kann eine derartige Abhängigkeit bestehen. Insbesondere kann der Sollwert n* zusätzlich eine Funktion eines Zustands Z der industriellen technischen Einrichtung 1 zum Zeitpunkt der Aktivierung des Elements 12 sein. Dies wird nachstehend in Verbindung mit FIG 10 näher erläutert.

Gemäß FIG 10 nimmt die Steuereinrichtung 2 in einem Schritt S11 die von dem ausgeübten Druck p abhängige Größe g entgegen. Sie prüft in einem Schritt S12, ob der Druck p gemäß der zuvor übermittelten Größe g - also nicht der Druck p gemäß der jetzt aktuell übermittelten Größe g - unterhalb des ersten Schwellenwertes liegt. Wenn dies der Fall ist, erfasst die Steuereinrichtung 2 in einem Schritt S13 den aktuellen Zustand Z der industriellen technischen Einrichtung 1. Anhand des erfassten Zustandes Z ermittelt sie in einem Schritt S14 den funktionalen Verlauf des Sollwertes n* als Funktion des Druckes p. Beispielsweise kann die Steuereinrichtung 2 die in FIG 8 dargestellte Kurve mit einem Faktor skalieren, wobei der Faktor von dem erfassten Zustand Z abhängt.

Weiterhin ermittelt die Steuereinrichtung 2 gemäß FIG 7 in einem Schritt S21 aufgrund der von ihr ermittelten und ausgeführten Reaktion eine Rückmeldung R und übermittelt die Rückmeldung R in einem Schritt S22 an die Auswertungseinrichtung 9. Die Auswertungseinrichtung 9 nimmt die Rückmeldung R gemäß FIG 6 in einem Schritt S26 entgegen. In einem Schritt S27 ermittelt die Auswertungseinrichtung 9 anhand der Rückmeldung R eine Ansteuerung für einen Aktuator 13, der dem Bereich 6 zugeordnet ist, auf den der Bediener 3 den Druck p ausübt. Die Auswertungseinrichtung 9 steuert den Aktuator 13 gemäß den FIG 3 und 6 in einem Schritt S28 entsprechend der ermittelten Ansteuerung an.

Der Aktuator 13 ist ein mikromechanischer Aktuator 13. Die Ansteuerung des Aktuators 13 erzeugt daher eine mechanische Wirkung auf den Bereich 6, die von dem Bediener 3 taktil erfassbar ist.

Zusätzlich zu einer Ansteuerung eines (ergänze: einzelnen) Elements 12 der industriellen technischen Einrichtung ist es möglich, dass die Steuereinrichtung 2 in Abhängigkeit von dem ausgeübten Druck p eine Anzahl von Elementen 12 aktiviert. In diesem Fall ist die Anzahl an aktivierten Elementen 12 eine monoton steigende Funktion des ausgeübten Druckes p. FIG 11 zeigt - rein beispielhaft - eine Ausgestaltung, bei welcher bei einem von p1 über p2, p3 usw. ansteigenden Druck p zunächst ein erster Antrieb 12 und dann ein zweiter Antrieb 12 aktiviert werden, wobei an die Antriebe 12 - beginnend mit 0 - nacheinander steigende Drehzahlsollwerte n1 bis n4 ausgegeben werden.

Ein Beispiel einer möglichen Anwendung mit der Ansteuerung mehrerer Antriebe 12 ist zum Beispiel, zunächst eine Bohrspindel zu aktivieren, sodann die Bohrspindel mit geringer Drehzahl n1 zu beaufschlagen, sodann die Bohrspindel mit hoher Drehzahl n2 zu beaufschlagen und erst danach die Bohrspindel zunächst langsam (n3) und später schneller (n4) entlang ihrer Rotationsachse abzusenken, so dass in ein Werkstück ein Loch gebohrt wird.

Das Aktivieren von Elementen 12 ist eine sicherheitsgerichtete Aktion. Versehentliche Fehlauslösungen aufgrund einer Fehlfunktion der Sensoreinrichtung 8, der Auswertungseinrichtung 9 usw. müssen daher vermieden werden. Der ausgeübte Druck p wird daher von der Sensoreinrichtung 8 vorzugsweise auf fehlersichere Weise erfasst. Beispielsweise kann die Sensoreinrichtung 8 gemäß FIG 3 zwei Sensoren 8' aufweisen, die unabhängig voneinander (und damit fehlersicher) den Druck p erfassen und den entsprechenden Wert w generieren und ihn der Auswertungseinrichtung 9 zuführen. Alternativ kann mittels einer weiteren, nicht dargestellten Sensoreinrichtung in rein binärer Weise das Drücken des entsprechenden Bereichs 6 des Touchscreens 5 erfasst werden.

Die Auswertungseinrichtung 9 selbst ist ebenfalls auf fehlersichere Weise ausgebildet. Beispielsweise kann sie aus zwei unabhängig voneinander arbeitenden Teileinrichtungen 9' bestehen, denen von je einem Sensor 8' der jeweilige Wert w zugeführt wird, die den ihnen zugeführten Wert w unabhängig voneinander auswerten und sich gegenseitig überwachen. Auch die Auswertungseinrichtung 9 wertet somit den an sie übermittelten Wert w auf fehlersichere Weise aus. Weiterhin wird auch die Größe g in fehlersicherer Weise ermittelt und an die Steuereinrichtung 2 übermittelt. Beispielsweise kann - analog zum Signalweg von der Sensoreinrichtung 8 zur Auswertungseinrichtung 9 - eine zweifache Übermittlung erfolgen.

Auch die Steuereinrichtung 2 ist in fehlersicherer Weise ausgebildet. Beispielsweise kann sie aus zwei unabhängig voneinander arbeitenden Teileinheiten 2' bestehen, die sich gegenseitig überwachen. Fehlersichere Steuereinrichtungen sind im Stand der Technik allgemein bekannt. Auch die Steuereinrichtung 2 ermittelt somit in fehlersicherer Weise die entsprechende, vom ausgeübten Druck p abhängige Reaktion und führt sie in fehlersicherer Weise aus.

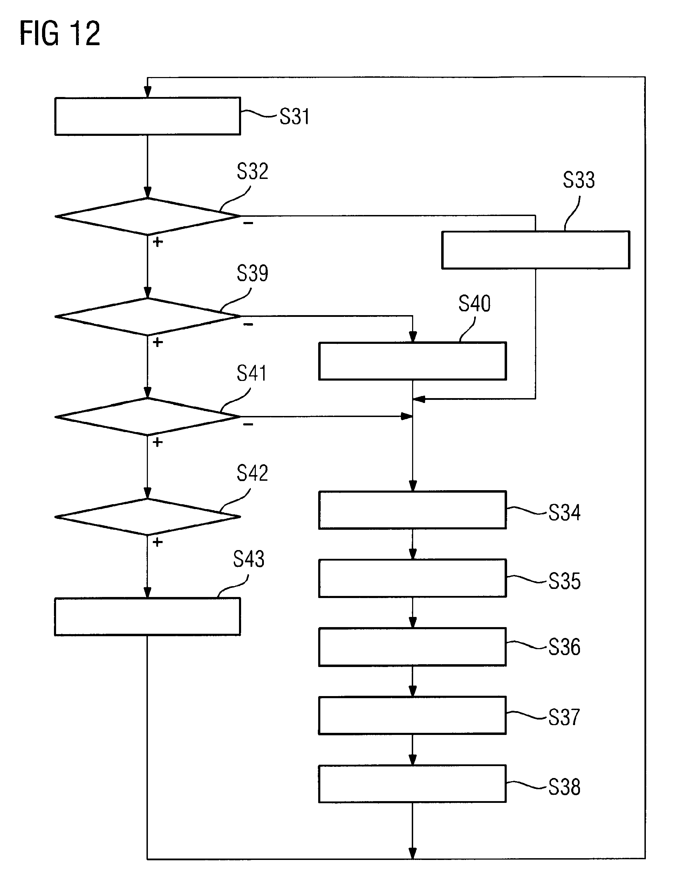

Die obenstehend erläuterten Betriebsweisen können noch weiter ausgestaltet werden. Beispielsweise ist es möglich, die Auswertungseinrichtung 9 so zu betreiben, wie dies nachfolgend in Verbindung mit FIG 12 näher erläutert wird.

Im Falle der Ausgestaltung gemäß FIG 12 befindet sich die Auswertungseinrichtung 9 entweder in einem Normalbetrieb oder in einem Sonderbetrieb. Im Normalbetrieb nimmt die Auswertungseinrichtung 9 in einem Schritt S31 den vom ausgeübten Druck p abhängigen Wert w entgegen. In einem Schritt S32 prüft sie, ob der ausgeübte Druck p von 0 verschieden ist, ob also überhaupt ein Druck p ausgeübt wird. Wenn der Druck p von 0 verschieden ist, setzt die Auswertungseinrichtung 9 einen Timer 14 (siehe FIG 3) zurück. Der Timer 14 ist Bestandteil der Bedienerschnittstelle 4.

Weiterhin ermittelt die Auswertungseinrichtung 9 in einem Schritt S34 die von dem ausgeübten Druck p abhängige Größe g. Die Größe g gibt die Auswertungseinrichtung 9 in einem Schritt S35 an die Steuereinrichtung 2 aus.

Weiterhin nimmt die Auswertungseinrichtung 9 die von der Steuereinrichtung 2 ermittelte Rückmeldung R in einem Schritt S36 entgegen. In einem Schritt S37 ermittelt sie in diesem Fall die zugehörige Ansteuerung des Aktuators 13 und steuert den Aktuator 13 in einem Schritt S38 entsprechend der ermittelten Ansteuerung an.

Falls im Schritt S32 erkannt wurde, dass der Druck p 0 ist, geht die Auswertungseinrichtung 9 zu einem Schritt S39 über. Im Schritt S39 prüft die Auswertungseinrichtung 9, ob der Timer 14 bereits läuft. Wenn dies nicht der Fall ist, geht die Auswertungseinrichtung 9 zu einem Schritt S40 über, in dem sie den Timer 14 startet. Sodann geht sie zum Schritt S34 über.

Der Timer 14 weist eine vorbestimmte Ablaufzeit T auf. Die Ablaufzeit T kann nach Bedarf bestimmt sein. Beispielsweise kann sie (irgendwo) zwischen 20 s und 5 min liegen. Wenn der Timer 14 bereits läuft, prüft die Auswertungseinrichtung 9 in einem Schritt S41, ob der Timer 14 abgelaufen ist, also die Ablaufzeit T erreicht hat. Wenn dies nicht der Fall ist, geht die Auswertungseinrichtung 9 zum Schritt S34 über.

Soweit bisher erläutert, entspricht die Vorgehensweise von FIG 12 dem Normalbetrieb der Auswertungseinrichtung 9 und im Ergebnis daher auch der industriellen technischen Einrichtung 1. Wenn jedoch die Prüfung des Schrittes S41 positiv verläuft, der Timer 14 also abgelaufen ist, wurde bis zum Erreichen der Ablaufzeit T auf keinen Bereich 6 des Touchscreens 5 ein Druck p ausgeübt. In diesem Fall geht die Auswertungseinrichtung 9 zu einem Schritt S42 über. Der Schritt S42 entspricht einem Sonderbetrieb der Auswertungseinrichtung 9 und damit im Ergebnis auch der industriellen technischen Einrichtung 1.

Im Sonderbetrieb ignoriert die Auswertungseinrichtung 9, ob auf einen Bereich 6 des Touchscreens 5 ein Druck p ausgeübt wird. Hierbei ist unbeachtlich, auf welchen Bereich 6 des Touchscreens 5 gegebenenfalls ein Druck p ausgeübt wird. Die Auswertungseinrichtung 9 nimmt also zwar eventuell den druckabhängigen Wert w entgegen. Sie übermittelt aber nicht die entsprechende Größe g an die Steuereinrichtung 2. Die Steuereinrichtung 2 ermittelt daher auch nicht die entsprechende Reaktion, die im Normalbetrieb ermittelt werden würde. Auch führt die Steuereinrichtung 2 diese Reaktion - selbstverständlich - nicht aus.

Der Sonderbetrieb muss wieder verlassen werden können. Die Auswertungseinrichtung 9 prüft daher im Rahmen des Schrittes S42, ob ihr vom Bediener 3 ein Umschaltbefehl vorgegeben wird. Wird der Umschaltbefehl vorgegeben, setzt die Auswertungseinrichtung 9 in einem Schritt S43 den Timer 14 zurück und geht sodann zum Schritt S31 und damit wieder in den Normalbetrieb über.

Der Umschaltbefehl ist eine Bedienhandlung des Bedieners 3, die eine von einer einmaligen Druckausübung auf einen einzelnen Bereich 6 des Touchscreens 5 verschiedene Bedienhandlung des Bedieners 3 ist. Beispielsweise ist eine der nachfolgenden Vorgehensweisen möglich:
- Reset von der Steuereinrichtung 2 aus.
- Drücken einer speziellen Resettaste der Bedienerschnittstelle 4.
- Ausschalten und Wiedereinschalten der Bedienerschnittstelle 4.
- Eingabe einer vorbestimmten Sequenz von Berührungen vorbestimmter Bereiche 6 des Touchscreens 5. Beispielsweise

kann gefordert sein, zuerst zweimal einen ersten Bereich 6 des Touchscreens 5 zu berühren, dann dreimal einen zweiten Bereich 6 des Touchscreens 5 und schließlich zweimal einen dritten Bereich 6 des Touchscreens 5.

Auch andere Varianten sind denkbar.

Es ist möglich, die obenstehend in Verbindung mit FIG 12 erläuterte Vorgehensweise zu variieren. Zum einen ist es möglich, die Schritte S39 und S40 ersatzlos entfallen zu lassen. Dies ist möglich, wenn der Timer 14 permanent läuft, solange er die Ablaufzeit T nicht erreicht hat. Weiterhin ist es möglich, die in Verbindung mit FIG 12 erläuterte Vorgehensweise auf die Steuereinrichtung 2 zu übertragen. In diesem Fall muss der Schritt S31 von FIG 12 durch den Schritt S6 von FIG 7 ersetzt werden. Die Schritte S34 bis S38 müssen in diesem Fall durch die Schritte S7, S8 und gegebenenfalls S21 und S 22 von FIG 7 ersetzt werden.

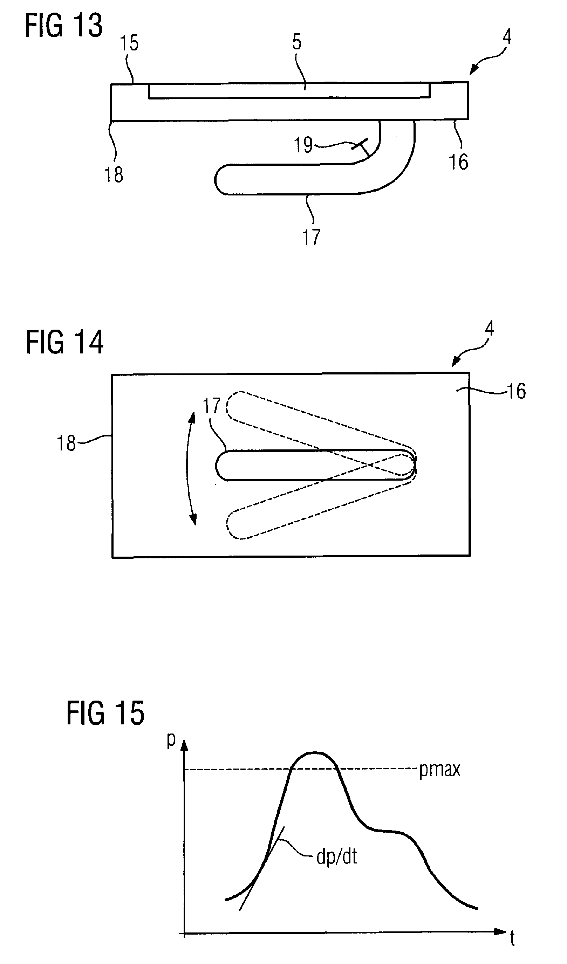

Die Bedienerschnittstelle 4 kann als fest eingebaute Bedienerschnittstelle 4 ausgebildet sein. Vorzugsweise ist die Bedienerschnittstelle 4 jedoch entsprechend der Darstellung von FIG 13 als mobile Bedienerschnittstelle 4 ausgebildet. Insbesondere kann in diesem Fall die Bedienerschnittstelle 4 einen Haltegriff 17 aufweisen. Der Touchscreen 5 ist auf einer Oberseite 15 der Bedienerschnittstelle 4 angeordnet. Der Haltegriff 17 kann an beliebiger Stelle angeordnet sein, beispielsweise auf der Unterseite 16 der Bedienerschnittstelle 4. Der Haltegriff 17 kann, wie aus FIG 14 ersichtlich ist, gegebenenfalls schwenkbar angeordnet sein. Die Bedienerschnittstelle 4 gemäß FIG 13 ist vorzugsweise derart dimensioniert, dass die in den FIG 13 und 14 mit 18 bezeichnete Kante der Bedienerschnittstelle 4 auf dem Unterarm des Bedieners 3 in der Nähe von dessen Armbeuge aufliegt, wenn der Bediener 3 die Bedienerschnittstelle 4 am Haltegriff 17 hält und auf seinen Unterarm auflegt.

Es ist möglich, dass der Haltegriff 17 eine rein mechanische Funktion hat. Vorzugsweise weist der Haltegriff 17 jedoch mindestens ein Betätigungselement 19 auf, beispielsweise einen Schalter oder - besonders bevorzugt - eine Taste oder eine Sensortaste. Das Betätigungselement 19 ist, falls es vorhanden ist, mit der Auswertungseinrichtung 9 verbunden. Ein Betätigen des Betätigungselements 19 wird in diesem Fall von der Auswertungseinrichtung 9 zusätzlich zum Ausüben von Druck p auf den Bereich 6 des Touchscreens 5 ausgewertet. Die möglichen Arten zur Auswertung sind vielfältiger Natur. Beispielsweise ist es möglich, mittels des Betätigungselements 19 ein Umschalten vom Sonder- in den Normalbetrieb (und gegebenenfalls auch umgekehrt) vorzunehmen. Alternativ ist es beispielsweise möglich, dass ein Ausüben von Druck p auf einen Bereich 6 des Touchscreens 5 nur dann als gültige Eingabe gewertet wird, wenn das Betätigungselement 19 betätigt ist. Alternativ ist es möglich, durch - gegebenenfalls wiederholtes - Betätigen des Betätigungselements 19 zwischen verschiedenen Masken des Touchscreens 5 umzuschalten. Auch ist es möglich, das Betätigungselement 19 ähnlich einer Totmanntaste zu verwenden. In diesem Fall muss die Taste 19 jeweils nach einigen Sekunden wieder gedrückt und losgelassen werden, anderenfalls erfolgt ein Abschalten der Bedienerschnittstelle 4 oder es wird ein Nothalt/Notaus der industriellen technischen Einrichtung 1 ausgelöst. Auch andere Vorgehensweisen und Kombinationen der obenstehend genannten Vorgehensweisen sind möglich.

Die datentechnische Verbindung zwischen den Schnittstellen 10, 11 der Auswertungseinrichtung 9 und der Steuereinrichtung 2 kann nach Bedarf ausgebildet sein. Vorzugsweise sind die Schnittstellen 10, 11 entsprechend der Darstellung in FIG 1 als leitungslose Schnittstellen ausgebildet. Insbesondere können sie als Funkverbindung ausgebildet sein.

Die vorliegende Erfindung weist viele Vorteile auf. Insbesondere ist auf relativ einfache Weise eine intuitive Bedienung der industriellen technischen Einrichtung 1 möglich. Weiterhin ist es - im Gegensatz zu einem mittels eines Touchscreens 5 realisierten Schiebereglers - nicht möglich, dass schlagartig auf einen maximalen einer Vielzahl von Sollwerten n* gesprungen wird. Denn aufgrund der Druckabhängigkeit müssen die Sollwerte n* in einer vorbestimmten Sequenz durchlaufen werden.

Die erfindungsgemäße, niveauaufgelöste Erfassung des Druckes p bietet auch noch weitergehende Auswertungsmöglichkeiten. Insbesondere ist es möglich, gemäß FIG 15 den ausgeübten Druck p als Funktion der Zeit t zu erfassen und beispielsweise die zeitliche Änderung dp/dt des Druckes p zu ermitteln und mit auszuwerten. Beispielsweise kann ermittelt werden, ob die zeitliche Ableitung dp/dt des Druckes p punktuell oder während eines relativ kurzen Minimalzeitraums einen maximal zulässigen Wert übersteigt. Wenn dies der Fall ist, kann dies als Panikreaktion gewertet werden, die einen Nothalt oder einen Notaus der industriellen technischen Einrichtung 1 auslöst. Die entsprechende Reaktion kann unabhängig davon ausgelöst werden, auf welchen Bereich 6 des Touchscreens 5 der entsprechende zeitliche Druckverlauf ausgeübt wird. Ebenso ist es möglich, einen Nothalt oder ein Notaus der industriellen technischen Einrichtung 1 auszulösen, wenn der ausgeübte Druck p einen maximal zulässigen Pegel pmax übersteigt.

Es ist möglich, einen Nothalt oder ein Notaus nur dann auszulösen, wenn beide Bedingungen (zu steiler Anstieg und Überschreiten des maximal zulässigen Druckpegels pmax) erfüllt sind. Vorzugsweise wird ein Notaus/Nothalt jedoch bereits dann ausgelöst, wenn nur eine der beiden Bedingungen erfüllt ist.

Obwohl die Erfindung im Detail durch das bevorzugte Ausführungsbeispiel näher illustriert und beschrieben wurde, so ist die Erfindung nicht durch die offenbarten Beispiele eingeschränkt und andere Varianten können vom Fachmann hieraus abgeleitet werden, ohne den Schutzumfang der Erfindung zu verlassen.

## Patentansprüche

1. Betriebsverfahren für eine industrielle technische Einrichtung (1),
- wobei von einem Bediener (3) der industriellen technischen Einrichtung (1) auf einen Bereich (6) eines Touchscreens (5) ein Druck (p) ausgeübt wird,
- wobei mittels einer dem Bereich (6) zugeordneten Sensoreinrichtung (8) ein von dem ausgeübten Druck (p) abhängiger Wert (w) generiert wird,
- wobei der von dem ausgeübten Druck (p) abhängige Wert (w) einer Auswertungseinrichtung (9) zugeführt wird,
- wobei in einem Normalbetrieb von der Auswertungseinrichtung (9) eine von dem ausgeübten Druck (p) abhängige Größe (g) an eine Steuereinrichtung (2) der industriellen technischen Einrichtung (1) übermittelt wird und von der Steuereinrichtung (2) anhand der an sie übermittelten Größe (g) eine von dem ausgeübten Druck (p) abhängige Reaktion ermittelt und ausgeführt wird,
- wobei die von dem ausgeübten Druck (p) abhängige Reaktion die Aktivierung eines Elements (12) der industriellen technischen Einrichtung (1) und das Ausgeben eines von dem ausgeübten Druck (p) abhängigen Sollwertes (n*) an das Element (12) umfasst,
- wobei der Sollwert (n*) eine monoton steigende Funktion des Druckes (p) ist und
- wobei mittels eines dem Bereich (6) zugeordneten Aktuators (13) eine für den Sollwert (n*) spezifische taktile Ansteuerung des Bereichs (6) erfolgt.

2. Betriebsverfahren nach Anspruch 1,
**dadurch gekennzeichnet, dass** der Sollwert (n*) den Wert Null aufweist, bis der Druck (p) einen Schwellenwert übersteigt.

3. Betriebsverfahren nach Anspruch 1 oder 2,
**dadurch gekennzeichnet, dass** der Sollwert (n*) ein Kraft-, Drehzahl- oder Geschwindigkeitssollwert ist.

4. Betriebsverfahren nach Anspruch 1, 2 oder 3,
**dadurch gekennzeichnet, dass** die Ableitung (dn*/dp) des Sollwertes (n*) nach dem Druck (p) eine monoton steigende Funktion ist.

5. Betriebsverfahren nach einem der obigen Ansprüche,
**dadurch gekennzeichnet, dass** der Sollwert (n*) zusätzlich eine Funktion eines Zustandes (Z) der industriellen technischen Einrichtung (1) zum Zeitpunkt der Aktivierung des Elements (12) ist.

6. Betriebsverfahren nach einem der obigen Ansprüche,
**dadurch gekennzeichnet, dass** die von dem ausgeübten Druck (p) abhängige Reaktion die Aktivierung einer Anzahl von Elementen (12) der industriellen technischen Einrichtung (1) umfasst und dass die Anzahl von aktivierten Elementen (12) eine monoton steigende Funktion des ausgeübten Druckes (p) ist.

7. Betriebsverfahren nach einem der obigen Ansprüche,
**dadurch gekennzeichnet,**
- **dass** der von dem ausgeübten Druck (p) abhängige Wert (w) von der Sensoreinrichtung (8) auf fehlersichere Weise generiert wird,
- **dass** der von dem ausgeübten Druck (p) abhängige Wert der Auswertungseinrichtung (9) auf fehlersichere Weise zugeführt wird,
- **dass** die von dem ausgeübten Druck (p) abhängige Größe (g) von der Auswertungseinrichtung (9) auf fehlersichere Weise ermittelt und an die Steuereinrichtung (2) übermittelt wird und
- **dass** die von dem ausgeübten Druck (p) abhängige Reaktion von der Steuereinrichtung (2) auf fehlersichere Weise ermittelt und ausgeführt wird.

8. Betriebsverfahren nach einem der obigen Ansprüche,
**dadurch gekennzeichnet,**
- **dass** durch das Beenden der Druckausübung ein Timer (14) gestartet wird, der eine vorbestimmte Ablaufzeit (T) aufweist,
- **dass** in dem Fall, dass von dem Bediener (3) vor Erreichen der Ablaufzeit (T) auf den Bereich (6) des Touchscreens (5) oder auf einen anderen Bereich (6) des Touchscreens (5) erneut ein Druck (p) ausgeübt wird, der Timer (14) zurückgesetzt wird,
- **dass** in dem Fall, dass von dem Bediener (3) bis zum Erreichen der Ablaufzeit (T) weder auf den Bereich (6) des Touchscreens (5) noch auf einen anderen Bereich (6) des Touchscreens (5) erneut ein Druck (p) ausgeübt wird, in einen Sonderbetrieb übergegangen wird und
- **dass** in dem Fall, dass von dem Bediener (3) im Sonderbetrieb auf den Bereich (6) des Touchscreens (5) oder auf einen anderen Bereich (6) des Touchscreens (5) erneut ein Druck (p) ausgeübt wird, von der Steuereinrichtung (2) nicht die Reaktion des Normalbetriebs ermittelt und ausgeführt wird.

9. Betriebsverfahren nach Anspruch 8,
**dadurch gekennzeichnet, dass** im Sonderbetrieb geprüft wird, ob der Bediener (3) einen Umschaltbefehl vorgibt, dass der Umschaltbefehl eine von einer einmaligen Druckausübung auf einen einzelnen Bereich (6) des Touchscreens (5) verschiedene Bedienhandlung des Bedieners (3) ist und dass bei Vorgabe des Umschaltbefehls vom Sonderbetrieb in den Normalbetrieb übergegangen wird.

10. Bedienerschnittstelle einer industriellen technischen Einrichtung,
- wobei die Bedienerschnittstelle einen Touchscreen (5) aufweist, der mindestens einen Bereich (6) aufweist, auf den von einem Bediener (3) der industriellen technischen Einrichtung (1) ein Druck (p) ausgeübt wird,
- wobei dem Bereich (6) eine Sensoreinrichtung (8) zugeordnet ist, mittels derer ein von dem ausgeübten Druck (p) abhängiger Wert (w) generiert wird,
- wobei die Bedienerschnittstelle eine Auswertungseinrichtung (9) aufweist, mit der die Sensoreinrichtung (8) zur Übermittlung des von dem ausgeübten Druck (p) abhängigen Wertes (w) verbunden ist,
- wobei die Auswertungseinrichtung (9) eine Schnittstelle (10) zu einer Steuereinrichtung (2) der industriellen technischen Einrichtung (1) aufweist, über die eine von dem ausgeübten Druck (p) abhängige Größe (g) an die Steuereinrichtung (2) übermittelt wird,
- wobei über die Schnittstelle (10) zur Steuereinrichtung (2) der industriellen technischen Einrichtung (1) von der Steuereinrichtung (2) eine Rückmeldung (R) über eine aufgrund der von dem ausgeübten Druck (p) abhängigen Größe (g) ausgeführte Reaktion an die Auswertungseinrichtung (9) übermittelt wird und
- wobei dem Bereich (6) ein Aktuator (13) zugeordnet ist, der von der Auswertungseinrichtung (9) mit einer von der ausgeführten Reaktion abhängigen, vom Bediener (3) taktil erfassbaren Ansteuerung beaufschlagt wird.

11. Bedienerschnittstelle nach Anspruch 10,
**dadurch gekennzeichnet,**
- **dass** der ausgeübte Druck (p) von der Sensoreinrichtung (8) auf fehlersichere Weise erfasst wird,
- **dass** der von dem ausgeübten Druck (p) abhängige Wert (w) von der Sensoreinrichtung (8) auf fehlersichere Weise generiert wird,
- **dass** der von dem ausgeübten Druck (p) abhängige Wert (w) der Auswertungseinrichtung (9) auf fehlersichere Weise zugeführt wird und
- **dass** die von dem ausgeübten Druck (p) abhängige Größe (g) von der Auswertungseinrichtung (9) auf fehlersichere Weise ermittelt und an die Steuereinrichtung (2) übermittelt wird.

12. Bedienerschnittstelle nach Anspruch 10 oder 11,
**dadurch gekennzeichnet,**
- **dass** sie einen Timer (14) aufweist, der durch das Beenden der Druckausübung gestartet wird und der eine vorbestimmte Ablaufzeit (T) aufweist,
- **dass** in dem Fall, dass von dem Bediener (3) vor Erreichen der Ablaufzeit (T) auf den Bereich (6) des Touchscreens (5) oder auf einen anderen Bereich (6) des Touchscreens (5) erneut ein Druck (p) ausgeübt wird, der Timer (14) zurückgesetzt wird,
- **dass** in dem Fall, dass von dem Bediener (3) bis zum Erreichen der Ablaufzeit (T) weder auf den Bereich (6) des Touchscreens (5) noch auf einen anderen Bereich (6) des Touchscreens (5) erneut ein Druck (p) ausgeübt wird, von einem Normalbetrieb in einen Sonderbetrieb übergegangen wird und
- **dass** in dem Fall, dass von dem Bediener (3) im Sonderbetrieb auf den Bereich (6) des Touchscreens (5) oder auf einen anderen Bereich (6) des Touchscreens (5) erneut ein Druck (p) ausgeübt wird, die zuhörige von dem ausgeübten Druck (p) abhängige Größe (g) von der Auswertungseinrichtung (9) nicht an die Steuereinrichtung (2) übermittelt wird.

13. Bedienerschnittstelle nach Anspruch 12,
**dadurch gekennzeichnet, dass** im Sonderbetrieb geprüft wird, ob der Bediener (3) einen Umschaltbefehl vorgibt, dass der Umschaltbefehl eine von einer einmaligen Druckausübung auf einen einzelnen Bereich (6) des Touchscreens (5) verschiedene Bedienhandlung ist und dass bei Vorgabe des Umschaltbefehls vom Sonderbetrieb in den Normalbetrieb übergegangen wird.

14. Bedienerschnittstelle nach einem der Ansprüche 10 bis 13,
**dadurch gekennzeichnet, dass** sie als mobile Bedienerschnittstelle ausgebildet ist.

15. Bedienerschnittstelle nach Anspruch 14,
**dadurch gekennzeichnet, dass** die Bedienerschnittstelle einen Haltegriff (17) aufweist.

16. Bedienerschnittstelle nach Anspruch 15,
**dadurch gekennzeichnet, dass** der Touchscreen (5) auf einer Oberseite (15) der Bedienerschnittstelle angeordnet ist und dass der Haltegriff (17) an der Unterseite (16) der Bedienerschnittstelle angeordnet ist.

17. Bedienerschnittstelle nach Anspruch 15 oder 16,
**dadurch gekennzeichnet, dass** der Haltegriff (17) mindestens ein Betätigungselement (19) aufweist, dass das Betätigungselement (19) mit der Auswertungseinrichtung (9) signaltechnisch verbunden ist und dass das Betätigen des Betätigungselements (19) von der Auswertungseinrichtung (9) zusätzlich zum Ausüben von Druck (p) auf den Bereich (6) des Touchscreens (5) ausgewertet wird.

18. Bedienerschnittstelle nach Anspruch 15, 16 oder 17,
**dadurch gekennzeichnet, dass** die Schnittstelle (10) zur Steuereinrichtung (2) der industriellen technischen Einrichtung (1) als leitungslose Schnittstelle (10) ausgebildet ist.

19. Industrielle technische Einrichtung,
- wobei die industrielle technische Einrichtung eine Bedienerschnittstelle (4) nach einem der Ansprüche 10 bis 18 aufweist,
- wobei die industrielle technische Einrichtung eine Steuereinrichtung (2) aufweist,
- wobei die Steuereinrichtung (2) eine Schnittstelle (11) zur Auswertungseinrichtung (9) zum Entgegennehmen einer ihr von der Auswertungseinrichtung (9) übermittelten von dem ausgeübten Druck (p) abhängigen Größe (g) aufweist,
- wobei von der Steuereinrichtung (2) anhand der an sie übermittelten von dem ausgeübten Druck (p) abhängigen Größe (g) eine von dem ausgeübten Druck (p) abhängige Reaktion ermittelt und ausgeführt wird,
- wobei die Steuereinrichtung (2) aufgrund der von ihr ermittelten und ausgeführten Reaktion die Rückmeldung (R) ermittelt und an die Auswertungseinrichtung (9) der Bedienerschnittstelle (4) übermittelt.

20. Einrichtung nach Anspruch 19,
**dadurch gekennzeichnet, dass** sie derart ausgebildet ist, dass sie im Betrieb ein Betriebsverfahren nach einem der Ansprüche 2 bis 9 ausführt.
